# EUROPÄISCHE PATENTANMELDUNG

(11) **EP 1 426 731 A1**
(43) Veröffentlichungstag der Anmeldung: **09.06.2004**
(21) Anmeldenummer: 03104113.0
(22) Anmeldetag: 07.11.2003
(51) Int. Cl.: G01B 11/00, G01B 21/00

(54) **Verfahren und Mikroskop zum Detektieren von Bildern eines Objekts**

(30) Priorität: 06.12.2002 DE 10257323
(71) Anmelder: Leica Microsystems Semiconductor GmbH, 35578 Wetzlar (DE)
(72) Erfinder: Cemic, Franz, 35789, Weilmünster (DE); Bläsing-Bangert, Carola, 35625, Hüttenberg (DE)
(74) Vertreter: Reichert, Werner F., Dr.

(57) **Zusammenfassung**

Die vorliegende Erfindung betrifft ein Verfahren und ein Mikroskop zum Detektieren von Bildern eines Objekts (2), insbesondere zur Bestimmung der Lokalisation eines Objekts (2) relativ zu einem Bezugspunkt, wobei das Objekt (2) mit einer Lichtquelle (3) beleuchtet und mit Hilfe eines Abbildungssystems (4) auf einen vorzugsweise als CCD-Kamera ausgeführten Detektor (5) abgebildet wird, wobei ein detektiertes Bild des Objekts (2) mit einem Referenzbild verglichen wird, wobei zur Minimierung der Fehler bei der Messwertinterpretation das erfindungsgemäße Verfahren und das erfindungsgemäße Mikroskop zum Detektieren von Bildern eines Objekts (2) dadurch gekennzeichnet ist, dass bei der Erzeugung des Referenzbilds Informationen über die Eigenschaften des Abbildungssystems (4) berücksichtigt werden und dass bei einer vorgebbaren Abweichung der verglichenen Bilder das Referenzbild derart variiert wird, dass es zumindest weitgehend dem detektierten Bild entspricht, so dass auf das zu detektierende Objekt (2) geschlossen werden kann.

## Beschreibung

Die vorliegende Erfindung betrifft ein Verfahren und ein Mikroskop zum Detektieren von Bildern eines Objekts, insbesondere zur Bestimmung der Lokalisation eines Objekts relativ zu einem Bezugspunkt, wobei das Objekt mit einer Lichtquelle beleuchtet und mit Hilfe eines Abbildungssystems auf einen vorzugsweise als CCD-Kamera ausgeführten Detektor abgebildet wird, wobei ein detektiertes Bild des Objekts mit einem Referenzbild verglichen wird.

Verfahren und Mikroskope der gattungsbildenden Art sind seit geraumer Zeit bekannt. Sie werden insbesondere bei Koordinaten-Messgeräten eingesetzt, die zur Metrologie von Linienbreiten oder Positionen auf Substraten der Halbleiterindustrie dienen. Lediglich beispielsweise wird auf die DE 198 19 492 A1 verwiesen, aus der ein Messgerät zur Vermessung von Strukturen auf einem transparenten Substrat bekannt ist. Dieses Messgerät dient zur hochgenauen Messung der Koordinaten von Strukturen auf Substraten, wie zum Beispiel Masken, Wafern, Flachbildschirmen und Aufdampfstrukturen, insbesondere aber für transparente Substrate. Die Koordinaten werden relativ zu einem Bezugspunkt auf wenige Nanometer genau bestimmt. Hierbei wird beispielsweise ein Objekt mit Licht einer Quecksilberdampflampe beleuchtet und mit Hilfe einer Abbildungsoptik auf eine CCD-Kamera abgebildet.

Mit immer größerer Packungsdichte der in der Halbleiterindustrie eingesetzten Strukturen werden die Strukturbreiten sowie die Strukturabstände immer kleiner. In gleichem Maße steigen die Anforderungen an die Spezifikationen dieser Koordinaten-Messgeräte.

Mittlerweile sind die Strukturbreiten und die Abstände von Strukturen zueinander schon kleiner als die Wellenlänge des Lichts, das zum Detektieren der Strukturen verwendet wird. Dennoch werden zur Qualitätsprüfung in der Produktion optische Messverfahren bevorzugt, da sie minimal in der Objektbeeinflussung sind und eine hohe Messgeschwindigkeit ermöglichen.

Die Grenze des optischen Auflösungsvermögens liegt gemäß Rayleigh-Kriterium bei ungefähr der halben Wellenlänge des zur Abbildung des Objekts verwendeten Lichts, so dass die Detektion von Strukturen, deren Abstände kleiner als die zum Detektieren der Strukturen verwendete Wellenlänge ist, die Grenze des optischen Auflösungsvermögens erreicht bzw. unter Umständen unterschreitet. Allerdings ist die Wiederholbarkeit von Objektdetektionen viel besser als das optische Auflösungsvermögen des Abbildungssystems. So kann beispielsweise die Position einer Kante einer Struktur anhand eines Schwellwertkriteriums im Prinzip mit einer Präzision von < 1 nm lokalisiert werden. Bei einer technisch erreichbaren Reproduzierbarkeit von derzeit 3 nm ergeben sich dennoch in der Praxis bei der Bestimmung von Strukturbreiten von Leiterbahnen eine Abweichung, die in der Größenordnung von bis zu 100 nm liegt. Ursachen hierfür sind hauptsächlich in der fehlerhaften Messwertinterpretation zu finden, bei der insbesondere Beugungseffekte nur unzureichend berücksichtigt werden. Solche Beugungseffekte gewinnen dann an Bedeutung, wenn die zu vermessenden Strukturen in der Größenordnung der zur Detektion der Strukturen verwendeten Wellenlänge des Lichts liegen oder wenn die zu detektierenden Strukturen Nachbarstrukturen im Abstand unter einer Wellenlänge des Detektionslichts aufweisen.

Zur Detektion der Strukturposition und zur Bestimmung der Strukturbreite ist neben dem aus der DE 198 19 492 A1 bekannten Verfahren zum Vermessen von Strukturen der firmeninterne Stand der Technik bekannt, der sich aus der DE 100 47 211 ergibt. Hierbei handelt es sich um ein "Zwei-Schwellwert-Verfahren", mit dem die Kantenposition der detektierten Strukturen bestimmt werden kann.

Aus dem Artikel "Optical Proximity Effects in Sub-micron Photomask DC Metrology" von N. Doe und R. Eandi, 16th European Conference EMC on Mask Technology for Integrated Circuits and Microscopical Components, München 1999, ist ein Gradientenverfahren zur Kantenlokalisation bekannt. Der dort verwendete Algorithmus zur Kantenbestimmung berücksichtigt nährungsweise Beugungseffekte sowie den Einfluss benachbarter Strukturen einer Struktur auf deren Strukturbreitenbestimmung.

Bei dem aus dem obengenannten Artikel bekannten Verfahren wird davon ausgegangen, dass es für jede Strukturbreite und für jeden Abstandswert zweier benachbarter Strukturen jeweils genau eine fest vorgegebene Fehlerabweichung gibt. Allerdings ist diesem Artikel entnehmbar, dass der Verlauf der Fehlerabweichung als Funktion des Abstands zwischen benachbarter Strukturen wiederum von der Breite der Strukturen abhängt. Demgemäß ist das dort bekannte Verfahren zur Strukturbreitenbestimmung nur eine sehr grobe Nährung zur Minimierung der Fehler, die beim Vermessen von "Lines-and-Spaces-Strukturen" nach den herkömmlichen Algorithmen - dem Gradienten- oder dem Zwei-Schwellwert-Verfahren - auftreten. Mit Lines-and-Spaces-Strukturen werden im folgenden Strukturen bezeichnet, die aus benachbarten Linienstrukturen (Lines) bestehen, die voneinander durch linienfreie Bereiche (Spaces) getrennt sind.

Des weiteren wird in dem obengenannten Artikel der Einfluss benachbarter Kanten auf die Strukturbreitenbestimmung nur sehr unzureichend erfasst, da es sich hierbei um ein Nährungsverfahren handelt, bei dem die physikalische Ursache der Kantenpositionsverschiebung pauschal und nicht qualitativ exakt erfasst wird. Die bei diesem Verfahren gemachten Voraussetzungen sind jedoch nicht in allen Fällen erfüllt, da sie unter anderem auf der Annahme beruhen, dass die Punktantwort des Abbildungssystems (Point-Spread-Function oder kurz PSF) eine gerade Funktion ist. So brechen beispielsweise Koma-Fehler der Abbildungsoptik oder eine schiefe Beleuchtung die Symmetrie der dort gemachten Annahmen. Bei einzelnen isolierten Linien werden mit dem dortigen Verfahren Asymmetrien in der PSF der Abbildungsoptik über die Optical-Transfer-Function (OTF) zwar mitberücksichtigt. Sobald aber die zu vermessende Linie Nachbarstrukturen aufweist, d.h. beispielsweise eine Lines-and-Spaces-Struktur vorliegt, wird die im Allgemeinen immer vorhandene Asymmetrie nicht mehr berücksichtigt. Dies hat zur Folge, dass die Strukturbreitenbestimmung mit dem aus dem Artikel bekannten Verfahren nicht unabhängig von der Umgebung der zu vermessenden Struktur ist.

Der vorliegenden Erfindung liegt daher die Aufgabe zugrunde, ein Verfahren und ein Mikroskop der gattungsbildenden Art derart anzugeben und weiterzubilden, dass die Fehler bei der Messwertinterpretation minimiert werden.

Das erfindungsgemäße Verfahren der gattungsbildenden Art löst die voranstehende Aufgabe durch die Merkmale des Patentanspruchs 1. Danach ist ein solches Verfahren dadurch gekennzeichnet, dass bei der Erzeugung des Referenzbilds Informationen über die Eigenschaften des Abbildungssystems berücksichtigt werden und dass bei einer vorgebbaren Abweichung der verglichenen Bilder das Referenzbild derart variiert wird, dass es zumindest weitgehend dem detektierten Bild entspricht, so dass auf das zu detektierende Objekt geschlossen werden kann.

Erfindungsgemäß ist zunächst erkannt worden, dass eine Minimierung der Fehler bei der Messwertinterpretation insbesondere dann erreicht werden kann, wenn die Eigenschaften des Abbildungssystems qualitativ exakt oder zumindest in sehr guter Nährung erfasst und bei der Durchführung des erfindungsgemäßen Verfahrens berücksichtigt werden. Hierzu fließen in erfindungsgemäßer Weise bei der Erzeugung des Referenzbilds Informationen über die Eigenschaften des Abbildungssystems ein. Diese Informationen könnten beispielsweise rechnerisch oder durch Detektion eines Kalibrierungsobjekts generiert werden.

Der Vergleich des detektierten Bilds mit dem Referenzbild liefert insbesondere dann eine geringe Abweichung, wenn das Referenzbild dem Bild des zu detektierenden Objekts zumindest ähnlich ist. Dementsprechend könnte beispielsweise ein Referenzbild erzeugt werden, das näherungsweise dem Bild des zu detektierenden Objekts entspricht. Hierzu könnte beispielsweise die Kenntnis des zu detektierenden Objekts ausgenützt werden. Insbesondere bei Koordinaten-Messgeräten ist im Allgemeinen das zu detektierende Objekt bekannt. So kennt man beispielsweise dessen Form und/oder Struktur.

Falls nun das detektierte Bild des Objekts von dem Referenzbild um einen vorgegebenen Wert abweicht, ist in erfindungsgemäßer Weise vorgesehen, dass das Referenzbild variiert wird. In die Variation des Referenzbilds könnte einerseits die zusätzliche Berücksichtigung weitergehender Annahmen über die Eigenschaften des Abbildungssystems eingehen. Hierbei wäre beispielsweise denkbar, dass die im Referenzbild berücksichtigte, im mathematischen Sinn gerade PSF durch zusätzliche Therme ergänzt wird, die diese Symmetrieeigenschaften nicht aufweisen. Somit können z.B. Koma-Fehler der Abbildungsoptik oder eine schiefe Objektbeleuchtung berücksichtigt werden. Andererseits könnte eine andere Abbildungscharakteristik bei der Erzeugung des Referenzbilds zugrundegelegt werden. So könnte bei der Erzeugung des Referenzbilds beispielsweise von einer kohärenten Beleuchtung anstatt von einer inkohärenten Beleuchtung ausgegangen werden.

Die Verfahrensschritte betreffend der Variation des Referenzbilds sowie des Vergleichens des detektierten Bilds des Objekts mit dem nun mehr variierten Referenzbild werden solange wiederholt, bis der Vergleich der Bilder eine vorgebbare Abweichung unterschreitet. Insoweit entspricht dann das detektierte Bild des Objekts zumindest nahezu dem variierten Referenzbild. Im Ergebnis kann durch diese Vorgehensweise auf das zu detektierende Objekt geschlossen werden. Hierunter ist zu verstehen, dass durch die Kenntnis der Eigenschaften des Abbildungssystems sowie durch die erfindungsgemäßen Vergleichs- bzw. Variationsschritte die Strukturen und Eigenschaften des detektierten Objekts ermittelbar sind, und zwar auch hinsichtlich Details, die unterhalb der Auflösungsgrenze des Abbildungssystems liegen können. Somit wird durch das erfindungsgemäße Verfahren nicht die optische Auflösung des Abbildungssystems als solches erhöht, sondern es wird anhand der detektierten Bilder des Objekts und anhand der Kenntnis der Eigenschaften des Abbildungssystems rechnerisch modelliert, welches Objekt nach einer Detektion mit dem Abbildungssystem das tatsächlich detektierte Bild ergeben würde.

Dementsprechend kann beim Unterschreiten einer vorgebbaren Abweichung zwischen dem detektierten Bild des Objekts und dem Referenzbild davon ausgegangen werden, dass auch von Strukturen im Bereich und sogar gegebenenfalls unterhalb der Auflösungsgrenze des Abbildungssystems - im Rahmen der berücksichtigten Eigenschaften des Abbildungssystems - eine Fehlerminimierung der Messwertinterpretation erreicht werden kann. Hierdurch kann in besonders vorteilhafter Weise bei mehrmaliger Objektdektektion die Wiederholbarkeit erhöht werden, da Fehler in der Messwertinterpretation verringert werden. Hierdurch wird letztendlich die Präzision der Datenauswertung erhöht.

Im folgenden wird nun darauf eingegangen, wie das Referenzbild erzeugt wird und wie eine Variation des Referenzbilds ausgeführt werden kann.

Zunächst wird die Erzeugung des Referenzbilds beschrieben. Hierzu ist zunächst vorgesehen, dass ein die Eigenschaften des Abbildungssystems charakterisierendes Bild oder eine die Eigenschaften des Abbildungssystems charakterisierende Funktion erzeugt wird. Bei der Erzeugung des die Eigenschaften des Abbildungssystems charakterisierende Bilds wird vorzugsweise ein bekanntes Objekt mit dem Abbildungssystem detektiert. Bei dem bekannten Objekt könnte es sich um eine definierte Objektstruktur handeln, wie sie beispielsweise bei transparenten Substraten zur Belichtung von Wafern zum Einsatz kommen. Bevorzugt ist hierbei als definierte Objektstruktur eine einzelne Leiterbahnstruktur vorgesehen, die zu beiden Seiten jeweils eine Kante aufweist. Bei der Erzeugung eines die Eigenschaften des Abbildungssystems charakterisierende Bilds könnte weiterhin vorgesehen sein, mehrere Detektionen desselben Objekts unter verschiedenen Winkellagen in der Objektebene durchzuführen. Hierzu könnte also das Objekt in einem Objektdrehtisch gelagert sein und von Detektion zu Detektion um einen Winkel von beispielsweise 10 Grad gedreht werden, wobei die Drehachse der Drehung parallel zur optischen Achse des Abbildungssystems ausgerichtet ist. Anhand der unter verschiedenen Winkellagen detektierten Bilder des bekannten Objekts ist es möglich, richtungsabhängige Eigenschaften des Abbildungssystems, z.B. Asymmetrien, zu berücksichtigen bzw. zu detektieren.

Zur Implementierung der entsprechenden Verfahrensschritte auf einem Computer kann es von Vorteil sein, wenn aus dem detektierten Bild eines bekannten Objekts eine analytische Funktion extrahiert wird, die die Eigenschaften des Abbildungssystems charakterisiert. Hierzu können Methoden der Fourier-Optik oder Methoden der numerischen Mathematik, insbesondere Polynom-Approximationen, eingesetzt werden. In besonders vorteilhafter Weise werden zur Repräsentation der analytischen Funktion auch Struve-Funktionen verwendet, wobei symmetrische oder asymmetrische Struve-Funktionen eingesetzt werden können. Asymmetrische Struve-Funktionen können vor allem dann notwendig sein, wenn die die Eigenschaften des Abbildungssystems charakterisierenden detektierten Bilder eines bekannten Objekts unter verschiedenen Winkellagen in der Objektebene unterschiedliche Abbildungseigenschaften in Abhängigkeit der Objektorientierung aufweisen. Asymmetrische Struve-Funktionen können mittels Linearkombination symmetrischer Struve-Funktionen gebildet werden. Die Eigenschaften der Struve-Funktionen sind beispielsweise in dem Buch "Table of Integrals, Series, and Products", I. S. Gradshteyn und I. M. Ryzhik, Academic Press 1980, Seite 982 und 983 zusammengefasst.

Alternativ zur Erzeugung eines die Eigenschaften des Abbildungssystems charakterisierenden Bilds kann eine Erzeugung einer die Eigenschaften des Abbildungssystems charakterisierenden Funktion vorgesehen sein. Eine solchen Funktion wird durch Berechnung oder Simulation generiert, vorzugsweise mittels eines Optiksimulationsprogramms. Hierbei können die optischen Parameter des Abbildungssystems - falls sie bekannt sind - in die Berechnung oder in die Simulation einbezogen werden, so dass die die Eigenschaften des Abbildungssytems charakterisierende Funktion möglichst genau den Abbildungsvorgang des Abbildungssystems beschreibt. Insbesondere können hierbei auch grundlegende Annahmen über die Eigenschaften des Abbildungssystems eingebracht werden, ob es sich beispielsweise um eine kohärente oder eine inkohärente Objektbeleuchtung handelt, oder ob für die Berechnung der die Eigenschaften des Abbildungssystems charakterisierenden Funktion der vektorielle Charakter der Lichtwellen oder die skalarer Näherung berücksichtigt wurde.

Eine derart generierte, die Eigenschaften des Abbildungssystems charakterisierende Funktion ist generell für sämtliche Koordinaten-Messgeräte verwendbar, berücksichtigt allerdings nicht die tatsächlich vorliegenden Abbildungseigenschaften eines einzelnen Geräts.

Weiterhin wird ein künstliches, ideales Bild durch Berechnung oder Simulation generiert, wobei das künstliche, ideale Bild dem zu detektierenden Objekt entspricht. Vorzugsweise werden hierzu Methoden der digitalen Bildverarbeitung eingesetzt, eine interaktive Bildgenerierung mit einem entsprechenden Computerprogramm wäre ebenfalls denkbar. Falls es sich bei dem zu detektierenden Objekt um Strukturen eines transparenten Substrats zur Belichtung von Wafern handelt, könnten auch Bilddaten des Herstellers herangezogen werden, die zur Erzeugung der transparenten Strukturen eingesetzt wurden.

Das Referenzbild wird aus der das Abbildungssystem charakterisierenden Funktion und dem künstlich generierten Bild berechnet. Falls ein das Abbildungssystem charakterisierendes Bild detektiert wurde, ist vorgesehen, das Referenzbild aus dem das Abbildungssystem charakterisierenden Bild und dem künstlich generierten Bild zu berechnen. Bei der Berechnung handelt es sich vorzugsweise um eine mathematische Faltungsoperation, die im Ortsraum durchzuführen ist. Bei zweidimensionalen Bildern liegt eine zweidimensionale mathematische Faltung vor. Eine entsprechende Anwendung des Faltungssatzes könnte unter Umständen vorgesehen sein, wenn die hierzu erforderlichen Rechenoperationen unter Verwendung des Faltungssatzes schneller ausgeführt werden können als eine Faltung im Ortsraum. Der Faltungssatz ist beispielsweise in J.W. Grodmann, Introduction to Fourier optics, Mc Graw Hill, New York, 1968 beschrieben. Hierbei wird die Fourier-Transformation der beiden miteinander zu faltenden Bilder gebildet, eine Multiplikation der fouriertransformierten Bilder ausgeführt und eine inverse Fourier-Transformation des Produktbilds gebildet.

In besonders vorteilhafter Weise werden die zur Berechnung des Referenzbilds erforderlichen Bilder, Funktionen und/oder das Referenzbild abgespeichert. Vorzugsweise werden die abgespeicherten Bilder oder Funktionen auf einem den Bildvergleich bzw. die Bildvariation durchführenden Computer abgespeichert, und zwar vorzugsweise in digitaler Form. Hierdurch ist es in vorteilhafter Weise möglich, die Erzeugung des die Eigenschaften des Abbildungssystems charakterisierenden Bilds bzw. der die Eigenschaften des Abbildungssystems charakterisierenden Funktion nur einmal zu erzeugen bzw. zu berechnen, so dass der diesbezügliche Verfahrensschritt nur einmal durchzuführen ist, sozusagen als Systemkalibrierung.

Die Variation des Referenzbilds erfolgt im Wesentlichen durch Variation des Objekts des Referenzbilds bzw. der Objektstrukturen und/oder der Objektform des Referenzbilds. Die Variation der Objektstrukturen und/oder der Objektform könnte beispielsweise durch Fit- oder Variationsalgorithmen erfolgen, wobei hier auch Methoden der Fuzzy-Logic oder der künstlichen Intelligenz eingesetzt werden könnten. Da in das Referenzbild auch das künstliche generierte Bild eingeht, könnte die Variation des Referenzbilds auch dadurch erfolgen, dass im Wesentlichen die Variation der Objektstrukturen und/oder der Objektform in dem künstlich generierten Bild erfolgt.

Der Vergleich eines detektierten Bilds mit einem Referenzbild könnte mit einer Gütefunktion bewertet werden, wobei hierzu vorzugsweise statistische und/oder numerische Auswertungsschritte vorgesehen sind. Hierbei könnten auch geeignete Normierungs- oder Skalierungsoperationen vorgesehen sein, um nämlich die Bildintensitätswerte der zu vergleichenden Bilder aneinander anzupassen.

In besonders bevorzugter Weise wird die Variation des Referenzbilds und der Vergleich des detektierten Bilds mit dem Referenzbild iterativ wiederholt. Als Abbruchkriterium der Iteration ist das Unterschreiten der vorgebbaren Abweichung der zu vergleichenden Bilder vorgesehen.

In vorrichtungsmäßiger Hinsicht löst das erfindungsgemäße Mikroskop der gattungsbildenden Art die eingangs genannte Aufgabe durch die Merkmale des Patentanspruchs 12. Danach ist ein solches Mikroskop dadurch gekennzeichnet, dass bei der Erzeugung des Referenzbilds Informationen über die Eigenschaften des Abbildungssystems berücksichtigbar sind und dass bei einer vorgebbaren Abweichung der verglichenen Bilder das Referenzbild derart variierbar ist, dass es zumindest weitgehend dem detektierten Bild entspricht, so dass auf das zu detektierende Objekt schließbar ist.

Das erfindungsgemäße Mikroskop dient insbesondere zur Durchführung eines Verfahrens nach einem der Ansprüche 1 bis 11. Es handelt sich in einer besonders bevorzugten Ausführungsform um ein Koordinaten-Messgerät, wie es beispielsweise aus der DE 198 19 492 A1 oder der DE 100 47 211 bekannt ist. Zur Vermeidung von Wiederholungen wird auf den vorangegangenen Teil der Beschreibung verwiesen.

Es gibt nun verschiedene Möglichkeiten, die Lehre der vorliegenden Erfindung in vorteilhafter Weise auszugestalten und weiterzubilden. Dazu ist einerseits auf die Patentansprüche 1 bis 12 und andererseits auf die nachfolgende Erläuterung der bevorzugten Ausführungsbeispiele der Erfindung anhand der Zeichnung zu verweisen. In Verbindung mit der Erläuterung der bevorzugten Ausführungsbeispiele der Erfindung anhand der Zeichnung werden auch im allgemeinen bevorzugte Ausgestaltungen und Weiterbildungen der Lehre erläutert. In der Zeichnung zeigen
- Fig. 1: eine schematische Darstellung eines Flussdiagramms gemäß einem Ausführungsbeispiel des erfindungsgemäßen Verfahrens,
- Fig. 2: eine schematische Darstellung einzelner Verfahrensschritte aus dem Ausführungsbeispiel aus Fig. 1,
- Fig. 3: eine schematische Darstellung alternativer Verfahrensschritte zu Fig. 2,
- Fig. 4: eine schematische Darstellung eines erfindungsgemäßen Koordinaten-Messgeräts,
- Fig.5: ein Diagramm eines detektierten und eines berechneten Intensitätsprofils einer Line-Spread-Function (LSF) des Abbildungssystems eines Koordinaten-Messgeräts und
- Fig.6: ein Diagramm detektierter und berechneter Intensitätsprofile von Lines-and-Spaces-Strukturen.

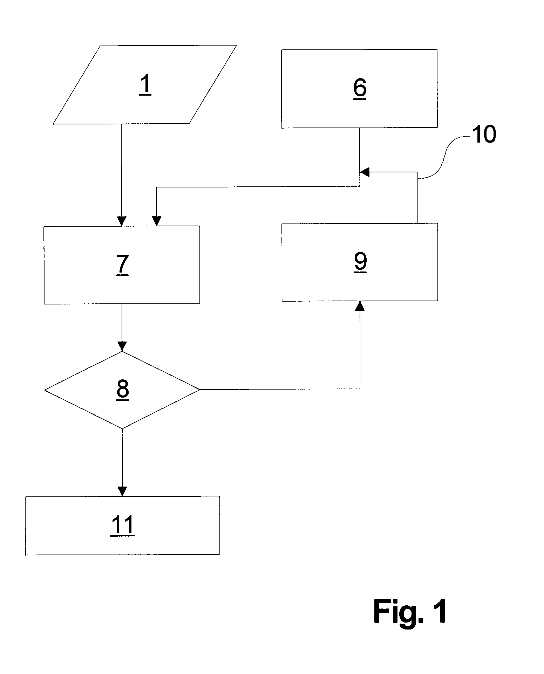

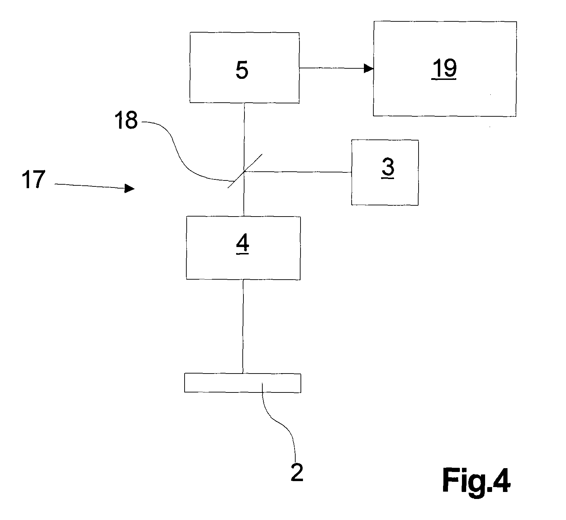

Fig. 1 zeigt in einer schematischen Darstellung ein Flussdiagramm, das ein Ausführungsbeispiel eines Verfahrens zum Detektieren von Bildern eines Objekts 2 zeigt. Fig. 4 ist entnehmbar, dass das Objekt 2 mit einer Lichtquelle 3 beleuchtet wird. Mit Hilfe des Abbildungssystems 4 wird das Objekt 2 auf einen als CCD-Kamera ausgeführten Detektor 5 abgebildet. Dieser Abbildungsvorgang ist in Fig. 1 mit dem Bezugszeichen 1 gezeigt, wobei das Ergebnis der Objektdetektion ein Bild des Objekts 2 ist. Das detektierte Bild wird gemäß Verfahrensschritt 7 mit einem Referenzbild verglichen. Der Verfahrensschritt zur Erzeugung des Referenzbilds ist mit dem Bezugszeichen 6 gekennzeichnet.

In erfindungsgemäßer Weise werden bei der Erzeugung des Referenzbilds Informationen über die Eigenschaften des Abbildungssystems 4 berücksichtigt. Falls die miteinander verglichenen Bilder gemäß Verzweigung 8 eine vorgebbare Abweichung überschreiten, wird gemäß Verfahrensschritt 9 das Referenzbild derart variiert, dass es zumindest weitgehend dem detektierten Bild entspricht. Das ursprüngliche Referenzbild wird zum erneuten Vergleich durch das gemäß Verfahrensschritt 9 variierte Referenzbild ersetzt, was durch den Pfeil mit dem Bezugszeichen 10 angedeutet ist. Falls die Vergleichsoperation 7 in Verbindung mit Verzweigung 8 eine den vorgebaren Wert unterschreitende Abweichung der verglichenen Bilder ergibt, kann in erfindungsgemäßer Weise gemäß Verfahrensschritt 11 auf das zu detektierende Objekt 2 geschlossen werden. So könnte hierbei vorgesehen sein, das detektierte Bild des Objekts 2 zusammen mit einem idealen Bild auf einer Bildausgabeeinheit auszugeben. Das ideale Bild wäre das Ergebnis des in Fig. 1 gezeigten Verfahrens, wobei hierbei auch auf Objektdetails geschlossen werden kann, die unterhalb der Auflösungsgrenze des Abbildungssystems 4 liegen.

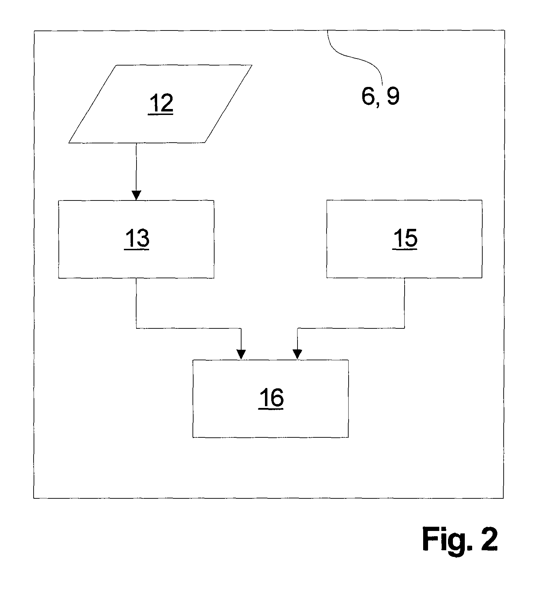

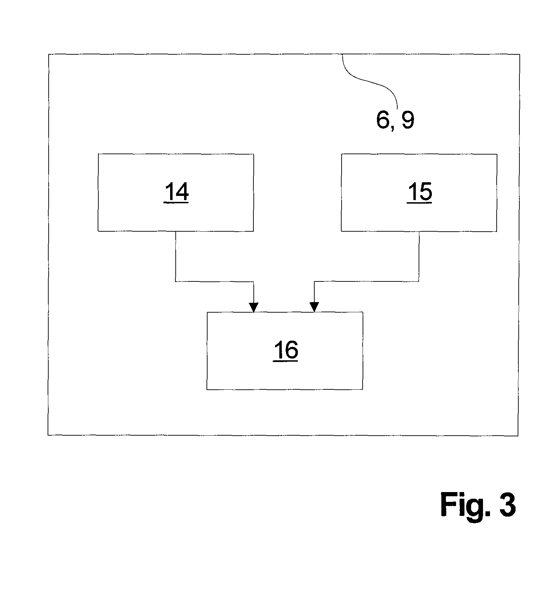

Fig. 2 zeigt die Verfahrensschritte, die bei einer Variante des erfindungsgemäßen Verfahrens zur Erzeugung des Referenzbilds gemäß Verfahrensschritt 6 oder 9 vorgesehen sind. So wird mit Verfahrensschritt 12 ein bekanntes Objekt mit dem Abbildungssystem 4 detektiert. Aus dem nunmehr vorliegenden detektierten Bild des bekannten Objekts ist in Verfahrensschritt 13 die Extraktion einer analytischen, die Eigenschaften des Abbildungssystem charakterisierenden Funktion vorgesehen. In der in Fig. 3 gezeigten alternativen Variante zur Erzeugung des Referenzbilds gemäß Verfahrensschritt 6 oder 9 wird mit Verfahrensschritt 14 eine die Eigenschaften des Abbildungssystems charakterisierende Funktion durch Simulation generiert, wobei hierbei ein Optiksimulationsprogramm verwendet wird. Somit liegt auch hier eine die Eigenschaften des Abbildungssystems charakterisierende Funktion vor.

Mit dem in den Fig. 2 und 3 gezeigten Verfahrensschritt 15 wird ein dem zu detektierenden Objekt entsprechendes künstliches, ideales Bild durch Berechnung generiert. Dies setzt hier voraus, dass das zu detektierende Objekt zumindest näherungsweise bekannt ist.

Mit dem in den Fig. 2 und 3 gezeigten Verfahrensschritt 16 wird das Referenzbild aus der das Abbildungssystem charakterisierenden Funktion und dem künstlich generierten Bild erzeugt. Bei dem Verfahrensschritt 16 handelt es sich um eine mathematische Faltungsoperation. Hiermit wird letztendlich der Abbildungsvorgang des künstlichen idealen Bilds - das dem zu detektierenden Bild entsprechen sollte ― auf rechnerischem Weg erzeugt.

Der in Fig. 1 gezeigte Verfahrensschritt 9 zur Variation des Referenzbilds erfolgt durch Variation der Objektstrukturen und/oder der Objektform des künstlichen idealen Bilds, das gemäß Fig. 2 oder Fig. 3 im Verfahrensschritt 15 generiert wird.

Der in Fig. 1 gezeigte Verfahrensschritt 7 umfasst einen Vergleich des detektierten Bilds mit dem Referenzbild bzw. dem variierten Referenzbild, wobei der Vergleich mit einer Gütefunktion bewertet wird. Hierzu sind vor allem statistische Auswertungsschritte vorgesehen.

Solange die Bewertung der Vergleichsoperation gemäß Verfahrensschritt 7 eine vorgebbare Abweichung überschreitet ergibt, wird Verfahrensschritt 9 und 7 - d.h. die Variation des Referenzbilds und der Vergleich des detektierten Bilds mit dem variierten Referenzbild ― iterativ wiederholt. Insoweit könnte man im hier vorliegenden Ausführungsbeispiel des erfindungsgemäßen Verfahrens von einem "Reverse-Engeneering-Verfahren" sprechen: es wird nämlich gemäß den in den Fig. 2 bzw. 3 gezeigten Verfahrensschritten das dem zu detektierenden Objekt entsprechende künstliche Bild "rechnerisch abgebildet" und mit dem tatsächlich detektierten Bild solange verglichen, bis eine Übereinstimmung der verglichenen Bilder vorliegt.

Fig. 4 zeigt ein erfindungsgemäßes Koordinaten-Messgerät 17 zur Durchführung eines Verfahrens nach einem der Ansprüche 1 bis 11. Das Koordinaten-Messgerät 17 weist eine Lichtquelle 3 auf, mit Hilfe derer das Objekt 2 beleuchtet wird. Der Strahlteiler 18 reflektiert ca. 50 % des Lichts der Lichtquelle 3, so dass dieses Licht über das Abbildungssystem 4 das Objekt 2 beleuchtet. Das vom Objekt 2 reflektierte Licht wird über das Abbildungssystem 4 auf einen als CCD-Kamera ausgeführten Detektor 5 abgebildet. Die mit dem Detektor 5 detektierten Bilder des Objekts 2 werden auf einen Steuer- und Auswerterechner 19 übertragen, auf dem das iterative Vergleichs- und Variationsverfahren implementiert ist.

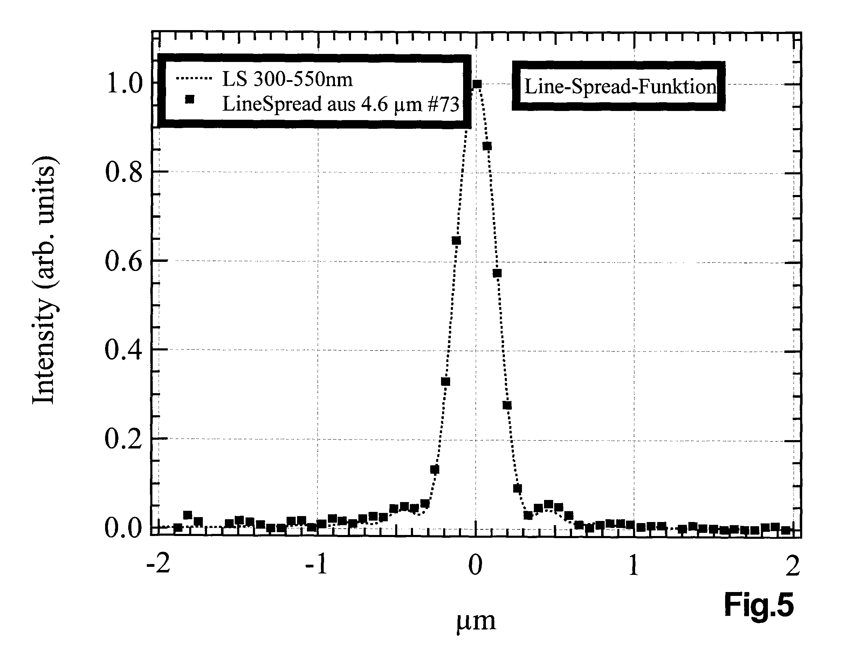

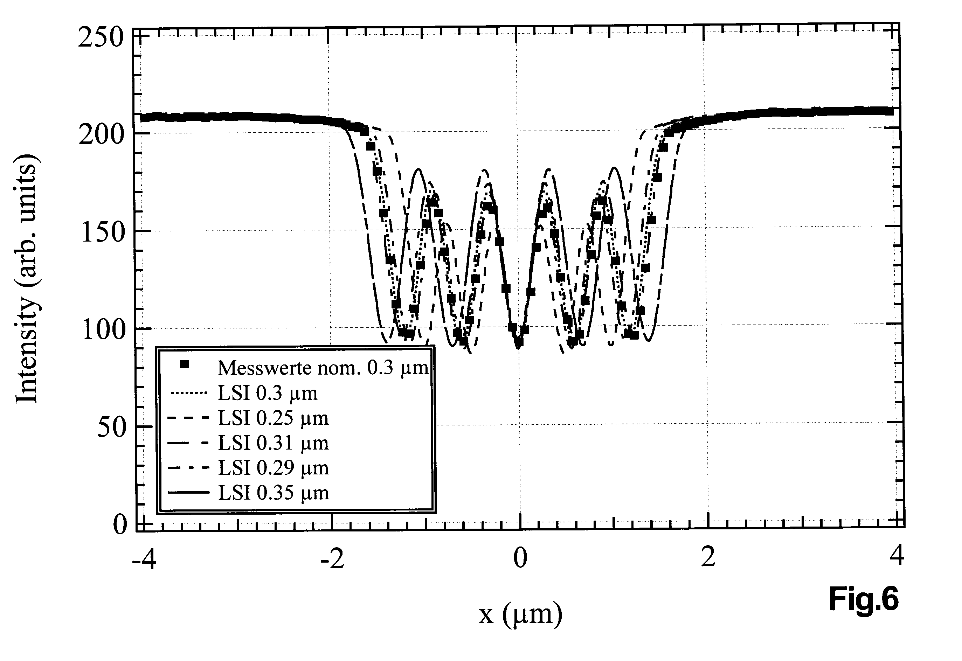

Das Ergebnis der einzelnen Verfahrensschritte ist im Allgemeinen ein zweidimensionales Bild. Die Diagramme aus den Fig. 5 und 6 zeigen Intensitätsprofile jeweils nur einer einzelnen Zeile eines Bildausschnitts (Region Of Interest) des jeweiligen Ergebnisbilds, in dem sich die jeweilige Struktur befindet.

Fig. 5 zeigt in einem Diagramm die Intensitätsprofile einer detektierten Line-Spread-Function (LSF) - quadratische Messpunkte - und die Intensitätsprofile einer berechneten LSF - punktierte Linie. Bei den in Fig. 5 gezeigten LSFs ist die gemessene bzw. detektierte Intensität als Funktion der Ortskoordinate in einer Richtung quer zur Linienstruktur in der Einheit µm aufgetragen. Bei den in Fig. 5 gezeigten Intensitätsprofilen der beiden LSFs handelt es sich einerseits um das Ergebnis des Verfahrensschritts 12 aus Fig. 2 - ein bekanntes Objekt ist mit dem Abbildungssystem 4 detektiert worden; bei dem bekannten Objekt handelt es sich um eine Linienstruktur mit einer Linienbreite von 0,2 µm - und andererseits um ein Ergebnis des Verfahrensschritts 14 aus Fig. 3, wobei die LSF durch Einbeziehung der optischen Systemdaten errechnet wurde. Bei dieser Berechnung wurde ein Beleuchtungswellenlängenbereich von 300 nm bis 550 nm zugrunde gelegt.

Die in dem Diagramm aus Fig. 6 gezeigten Intensitätsprofile sind zum einen das Ergebnis des Verfahrensschritts 1 aus Fig. 1 und zum anderen das Ergebnis aus dem Verfahrensschritt 6 aus Fig. 1. So ist das mit dem Koordinaten-Messgerät 17 aus Fig. 4 detektierte Intensitätsprofile einer Lines-and-Spaces-Struktur mit quadratischen Symbolen gekennzeichnet. Bei der detektierten Lines-and-Spaces-Struktur handelt es sich um fünf transparente Linien einer lichtundurchlässigen Struktur, wobei die transparenten Linien eine Breite von 0,3 µm und einen Abstand von 0,3 µm zueinander aufweisen. Die Intensitätsprofile aus dem Diagramm aus Fig. 6 entsprechen ebenfalls dem Intensitätsverlauf eines Ausschnitts des detektierten bzw. berechneten Bilds entlang einer Linie quer zur Lines-and-Spaces-Struktur. Das detektierte Intensitätsprofil ― gekennzeichnet durch die quadratischen Symbole ― aus Fig. 6 ist das Ergebnis des Verfahrensschritts 1 aus Fig. 1.

Das grobgestrichtelt gezeigte Intensitätsprofil [0,25 µm] des Diagramms aus Fig. 6 entspricht dem Ergebnis aus dem Verfahrensschritt 6 aus Fig. 1. Die punktiert, strichpunktiert und durchgezogen gezeigten Intensitätsprofil des Diagramms aus Fig. 6 sind das Ergebnis des wiederholten Anwendens des Verfahrensschritts 9 aus Fig. 1. Hierbei wurden jeweils ideale Lines-and-Spaces-Strukturen der Berechnung zugrunde gelegt, die jeweils eine Linienbreite bzw. einen Linienabstand von 0,29 µm, 0,3 µm, 0,31 µm und 0,35 µm aufweisen.

Das gestrichelt eingezeichnete Intensitätsprofil entspricht einer Lines-and-Spaces-Struktur mit einer Linienbreite und einem Linienabstand von jeweils 0,25 µm. Es wurde gemäß den Verfahrensschritten 6, d.h. gemäß den Verfahrensschritten 12, 13, 15 und 16 aus Fig. 2, erzeugt. Hierbei wurde die gemessene LSF aus Fig. 5 zugrunde gelegt, die das Ergebnis des Verfahrensschritts 12 aus Fig. 2 ist. Hieraus wurde gemäß Verfahrensschritt 13 aus Fig. 2 eine analytische Funktion extrahiert, die die Eigenschaften des Abbildungssystems 4 beschreibt. Mit dieser analytischen Funktion ist das ideale künstliche gemäß Verfahrensschritt 16 aus Fig. 2 mathematisch gefaltet. Dem idealen künstlichen Bild wurde zur Berechnung gemäß Verfahrensschritt 15 aus Fig. 2 eine Lines-and-Spaces-Struktur zugrunde gelegt, die eine Linienbreite und einen Linienabstand von 0,25 µm aufweist. Die übrigen berechneten Intensitätsprofile aus dem Diagramm aus Fig. 6 sind das Ergebnis der Variation des nicht gezeigten idealen, künstlichen Bilds der Lines-and-Spaces-Strukturen mit den jeweils anderen Linienbreiten bzw. Linienabständen - 0,29 µm, 0,3 µm, 0,31 µm und 0,35 µm. Diese werden ebenfalls gemäß Verfahrensschritt 16 aus Fig. 2 mit dem Ergebnisbild des Verfahrensschritts 13 aus Fig. 2 mathematisch gefaltet und dem Verfahrensschritt 7 aus Fig. 1 - der Vergleich des detektierten Bilds mit dem variierten Referenzbild ― zugeführt.

Fig. 6 ist weiterhin entnehmbar, dass das detektierte Intensitätsprofil ― quadratische Symbole - sehr gut mit dem berechneten Intensitätsprofil der Linienbreite bzw. des Linienabstands von 0,3 µm übereinstimmt. Dementsprechend wird beim Vergleich der den beiden Intensitätsprofilen entsprechenden Bilder gemäß Verfahrensschritt 7 aus Fig. 1 die vorgebbare Abweichung nicht überschritten. Das dem Intensitätsprofil 0,3 µm zugrunde liegende berechnete Bild ist das Ergebnis gemäß Verfahrensschritt 11 aus Fig. 1.

Abschließend sei ganz besonders darauf hingewiesen, dass die voranstehend erörterten Ausführungsbeispiele lediglich zur Beschreibung der beanspruchten Lehre dienen, diese jedoch nicht auf die Ausführungsbeispiele einschränken.

### Bezugszeichenliste

- 1: Detektion eines Bilds von (2)
- 2: Objekt
- 3: Lichtquelle
- 4: Abbildungssystem
- 5: Detektor
- 6: Erzeugung des Referenzbilds
- 7: Vergleich des detektierten Bilds mit dem Referenzbild
- 8: Verzweigung
- 9: Variation des Referenzbilds
- 10: Ersetzen des Referenzbilds durch variiertes Referenzbild
- 11: Auf das detektierte Bild des Objekts (2) schließen
- 12: Detektion eines bekannten Objekts
- 13: Extraktion einer analytischen Funktion, die die Eigenschaften von (4) beschreibt
- 14: Simulation der die Eigenschaften von (4) charakterisierenden Funktion
- 15: Generieren eines dem zu detektierenden Objekt (2) entsprechenden idealen, künstlichen Bilds
- 16: Mathematische Faltung der Ergebnisbilder der Verfahrensschritte (13) und (15) bzw. (14) und (15)
- 17: Koordinaten-Messgerät
- 18: Strahlteiler
- 19: Steuer- und Auswerterechner

## Patentansprüche

1. Verfahren zum Detektieren von Bildern eines Objekts (2), insbesondere zur Bestimmung der Lokalisation eines Objekts (2) relativ zu einem Bezugspunkt, wobei das Objekt (2) mit einer Lichtquelle (3) beleuchtet und mit Hilfe eines Abbildungssystems (4) auf einen vorzugsweise als CCD-Kamera ausgeführten Detektor (5) abgebildet wird, wobei ein detektiertes Bild des Objekts (2) mit einem Referenzbild verglichen wird,
**dadurch gekennzeichnet, dass** bei der Erzeugung des Referenzbilds Informationen über die Eigenschaften des Abbildungssystems (4) berücksichtigt werden und dass bei einer vorgebbaren Abweichung der verglichenen Bilder das Referenzbild derart variiert wird, dass es zumindest weitgehend dem detektierten Bild entspricht, so dass auf das zu detektierende Objekt (2) geschlossen werden kann.

2. Verfahren nach Anspruch 1, **dadurch gekennzeichnet, dass** ein die Eigenschaften des Abbildungssystems (4) charakterisierendes Bild oder eine die Eigenschaften des Abbildungssystems (4) charakterisierende Funktion erzeugt wird.

3. Verfahren nach Anspruch 2, **dadurch gekennzeichnet, dass** zur Erzeugung des die Eigenschaften des Abbildungssystems (4) charakterisierenden Bilds ein bekanntes Objekt mit dem Abbildungssystem (4) detektiert wird, wobei vorzugsweise mehrere Detektionen desselben Objekts unter verschiedenen Winkellagen in der Objektebene erfolgen.

4. Verfahren nach Anspruch 3, **dadurch gekennzeichnet, dass** aus dem detektierten Bild eine analytische, die Eigenschaften des Abbildungssystems (4) charakterisierende Funktion extrahiert wird, wobei vorzugsweise symmetrische oder asymmetrische Struve-Funktionen zur Repräsentation der analytischen Funktion verwendet werden.

5. Verfahren nach Anspruch 2, **dadurch gekennzeichnet, dass** die die Eigenschaften des Abbildungssystems (4) charakterisierende Funktion durch Berechnung oder Simulation generiert wird, vorzugsweise mittels eines Optiksimulationsprogramms.

6. Verfahren nach einem der Ansprüche 1 bis 5, **dadurch gekennzeichnet, dass** ein dem zu detektierenden Objekt (2) entsprechendes künstliches, ideales Bild durch Berechnung oder Simulation generiert wird, vorzugsweise mit Methoden der digitalen Bildverarbeitung.

7. Verfahren nach Anspruch 6, **dadurch gekennzeichnet, dass** das Referenzbild aus der das Abbildungssystem (4) charakterisierenden Funktion und dem künstlich generierten Bild oder aus dem das Abbildungssystem (4) charakterisierenden Bild und dem künstlich generierten Bild berechnet wird, vorzugsweise in Form einer mathematischen Faltungsoperation.

8. Verfahren nach einem der Ansprüche 1 bis 7, **dadurch gekennzeichnet, dass** die Variation des Referenzbilds im wesentlichen durch Variation der Objektstrukturen und/oder der Objektform erfolgt, vorzugsweise in dem künstlich generierten Bild.

9. Verfahren nach einem der Ansprüche 1 bis 8, **dadurch gekennzeichnet, dass** der Vergleich eines detektierten Bilds mit einem Referenzbild mit einer Gütefunktion bewertet wird, wobei hierzu vorzugsweise statistische und/oder numerische Auswertungsschritte vorgesehen sind.

10. Mikroskop, vorzugsweise Koordinaten-Messgerät (17), zum Detektieren von Bildern eines Objekts (2), insbesondere zur Bestimmung der Lokalisation eines Objekts (2) relativ zu einem Bezugspunkt, wobei das Objekt (2) mit einer Lichtquelle (3) beleuchtet und mit Hilfe eines Abbildungssystems (4) auf einen vorzugsweise als CCD-Kamera ausgeführten Detektor (5) abgebildet wird, wobei ein detektiertes Bild des Objekts (2) mit einem Referenzbild vergleichbar ist, vorzugsweise zur Durchführung eines Verfahrens nach einem der Ansprüche 1 bis 11,
**dadurch gekennzeichnet, dass** bei der Erzeugung des Referenzbilds Informationen über die Eigenschaften des Abbildungssystems (4) berücksichtigbar sind und dass bei einer vorgebbaren Abweichung der verglichenen Bilder das Referenzbild derart variierbar ist, dass es zumindest weitgehend dem detektierten Bild entspricht, so dass auf das zu detektierende Objekt (2) schließbar ist.
